# EUROPEAN PATENT SPECIFICATION

(11) **EP 0 351 786 B1**
(45) Date of publication and mention of the grant of the patent: **02.05.1997**
(21) Application number: 89113164.1
(22) Date of filing: 18.07.1989
(51) Int. Cl.: G06F 17/30, G06F 15/02

(54) **Data processing apparatus**
Datenverarbeitungsgerät
Dispositif de traitement de données

(30) Priority: 19.07.1988 JP 95530/88 U; 19.07.1988 JP 95531/88 U
(43) Date of publication of application: 24.01.1990
(73) Proprietor: CASIO COMPUTER COMPANY LIMITED, Shinjuku-ku Tokyo 160 (JP)
(72) Inventor: Kato, Hiroyuki Pat. Dep. Dev. Div., Hamura R & D, Hamura-machi Nishitama-gun Tokyo 190-11 (JP); Sanbongi, Masao Pat. Dep. Dev. Div., Hamura R & D, Hamura-machi Nishitama-gun Tokyo 190-11 (JP); Otani, Yuji Pat. Dep. Dev. Div., Hamura R & D, Hamura-machi Nishitama-gun Tokyo 190-11 (JP)
(74) Representative: Grünecker, Kinkeldey, Stockmair & Schwanhäusser Anwaltssozietät

(56) References cited:
- EP-A- 0 079 465
- EP-A- 0 253 138
- US-A- 4 791 561
- D.F. Stubbs and N.W. Webre: "Data Structures with Abstract Data Types and Pascal" 1985, Brooks/Cole Publishing Company, Monterey, California

## Description

The present invention relates to a data processing apparatus.

EP-A-0 079 465 discloses a method of encoding and compactly storing an information data base by creating a list of unique items and an index table including pointers to said list of unique items, and further discloses a method for accessing information from said condensed data base.

Figure 5 of EP-A-0 079 465 shows a storage arrangement on a DASD with a data base 44 consisting of records 41 having five fields of information about each employee. Each field has reserved a fixed number of bytes for storing the corresponding data. In order to compact and encode the data base information, each record 41 of the data base information is sequentially accessed and saved in a work area of the system memory. The saved record fields are summary sorted into a summary list 45. The summary sort operation sorts the fields into alphabetic and numeric order and eliminates duplicates. Then, the data base information is accessed again and each accessed field is compared to the contents of the summary list to determine the position of the field in the summary list. The positions are saved in corresponding fields of a corresponding index record in an index table 43.

Compact electronic recording apparatuses have recently been developed in place of pocketbooks for recording addresses. The apparatus manages data of individual names, telephone numbers, and the like.

When such a data storage apparatus is set in an input mode, the apparatus is set in a state of waiting for a name data input. When an operator inputs name data to the apparatus, the apparatus sequentially displays a menu designating that each item data such as an address and a telephone number should be input. The operator inputs item data in accordance with the menu. In conventional data storage apparatuses, however, items of input data are limited to predetermined items, e.g., addresses and telephone numbers. For this reason, even if a user demands to manage some special item data, the apparatus cannot satisfy such a demand. Hence, the conventional apparatuses are inconvenient.

In addition, a data storage apparatus sometimes stores a large number of data representing the same last or first name. In this case, if a data search is to be performed on the basis of, e.g., name data using a conventional apparatus, an operator must read out all the corresponding name data and determine whether each of the readout name data is desired data.

In the conventional apparatus, therefore, as the number of data registered is increased, data search requires much labor and time. That is, the conventional apparatus is very inconvenient.

It is the object of the present invention to provide a data processing apparatus capable of variably setting input data items in accordance with a purpose of a user.

This object is solved by the subject mutter of claim 1.

Preferred embodiments of the present invention are the subject matter of dependent claims to claim 1.

In the following, a preferred embodiment of the present invention will be described in conjunction with the accompanying drawings, in which:
Fig. 1 is a block diagram showing a data processing apparatus to which the present invention is applied;
Fig. 2 is a view showing an arrangement of an item memory of the data processing apparatus;
Figs. 3 to 6 are views respectively showing the contents of first to fourth memories;
Fig. 7 is a view showing an arrangement of a combination data memory;
Fig. 8 is a flow chart showing an operation of data input;
Fig. 9 is a flow chart showing an operation of data registration;
Fig. 10 is a flow chart showing a data search operation;
Fig. 11 is a flow chart for explaining an AND search operation of data search operations in detail;
Fig. 12 is a flow chart for explaining an OR search operation of data search operations in detail; and
Figs. 13A to 13D are views respectively showing key operations and displays when data items to be handled by the data processing apparatus are to be added.

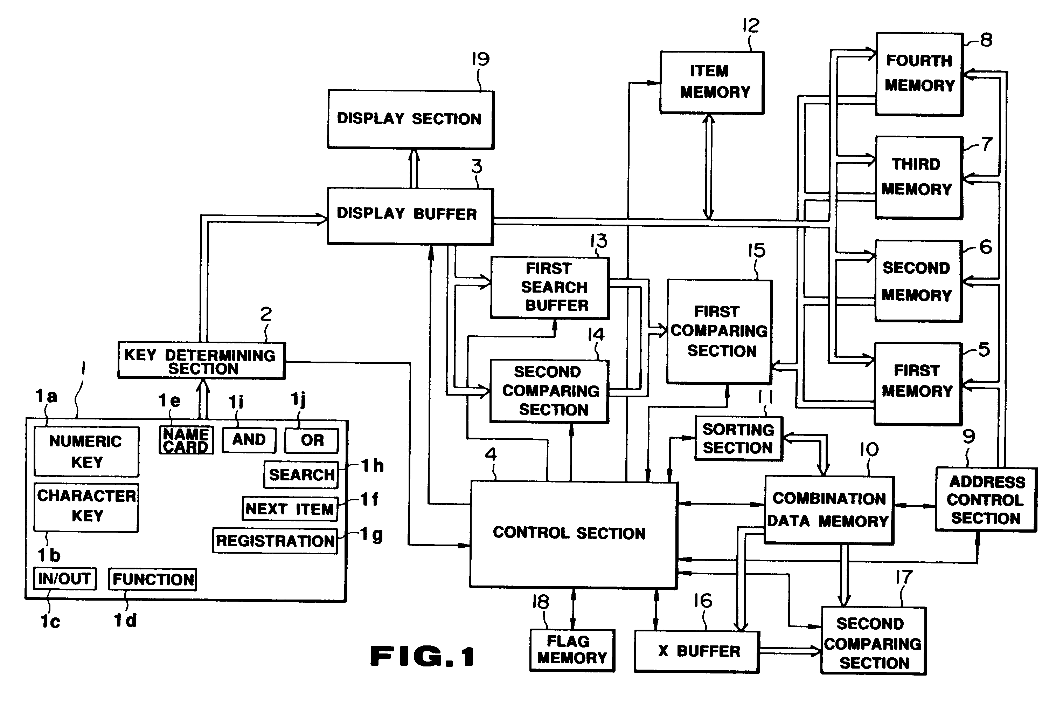

Fig. 1 is a block diagram showing a data processing apparatus to which the present invention is applied.

A key input section 1 comprises numeric keys 1a for inputting numeric data, character keys 1b for inputting letters, symbols, and the like, an "IN/OUT" key 1c for designating an input/output mode of the apparatus, and a "function" key 1d for displaying the functions of the apparatus. In addition, the key input section 1 comprises a "name card" key 1e for setting a name card management mode, a "next item" key 1f for designating an item when data is to be input in the name card management mode, a "registration" key 1g for designating data registration, a "search" key 1h for designating a search for stored data, and "AND" and "OR" keys 1i and 1j for determining search conditions.

Key input data from the key input section 1 is supplied to a key determining section 2. The section 2 supplies the input data from the section 1 to a display buffer 3, and also supplies execution data for designating processing designated by the function key to a control section 4.

The control section 4 is constituted by a read-only memory (ROM) and stores programs for controlling the respective circuits.

Upon reception of the execution data operated by the key input section 1 through the key determining section 2, the control section 4 outputs a control command to cause each circuit to perform processing corresponding to a key operation in accordance with a program.

Input data are respectively stored in first to fourth memories 5 to 8 in units of items in accordance with a control operation of an address control section 9. The sets of addresses of the areas, in each of which the items of data relating an individual are stored are stored in a combination data memory 10. The contents of the memory 10 are sorted by a sorting section 11. An item memory 12 stores the items of data stored in the first to fourth memories 5 to 8.

First and second search buffers 13 and 14 independently and temporarily hold search data which are input from the key input section 1. These data held in the buffers 13 and 14 are supplied to a first comparing section 15 and compared with the storage contents of the memories 5, 6, 7, and 8. The comparison results from the first comparing section 15 are supplied to the control section 4.

An X buffer 16 holds one of the address data stored in the combination data memory 10. A second comparing section 17 determines whether the address data held in the X buffer 16 coincides with other address data stored in the combination data memory 10, and supplies the determination result to the control section 4.

A coincidence or noncoincidence flag is set in a flag memory 18 in accordance with the comparison result from the second comparing section 17.

Note that the key input data, the storage data of the item memory 12, and the data stored in the first to fourth memories are held in the display buffer 3, and are displayed on a display section 19. The display section 19 is constituted by a dot matrix liquid crystal display unit.

An operation of the embodiment having the above-described arrangement will be described below.

Data input to the apparatus will be described first.

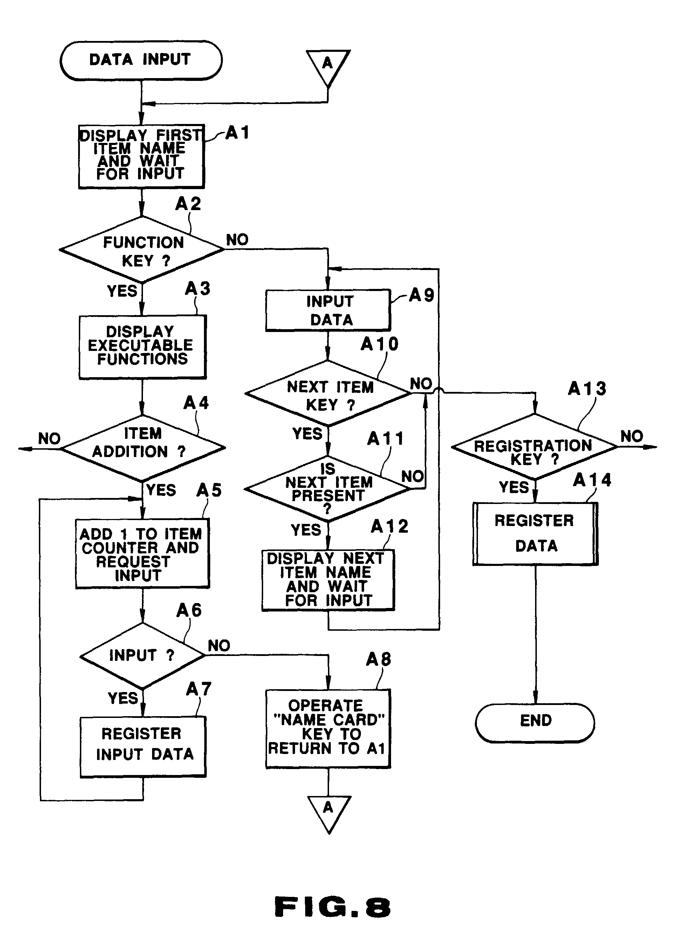

An operator operates the "IN/OUT" key 1c of the key input section 1 to set the apparatus in the input mode. The operator then operates the "name card" key 1e to cause the apparatus to start execution of processing for storing name card data, as shown in Fig. 8. This storage processing will be described below with reference to Fig. 8.

In step A1, the first item name stored in the item memory 12 is read out to the display buffer 3 in response to an instruction from the control section 4.

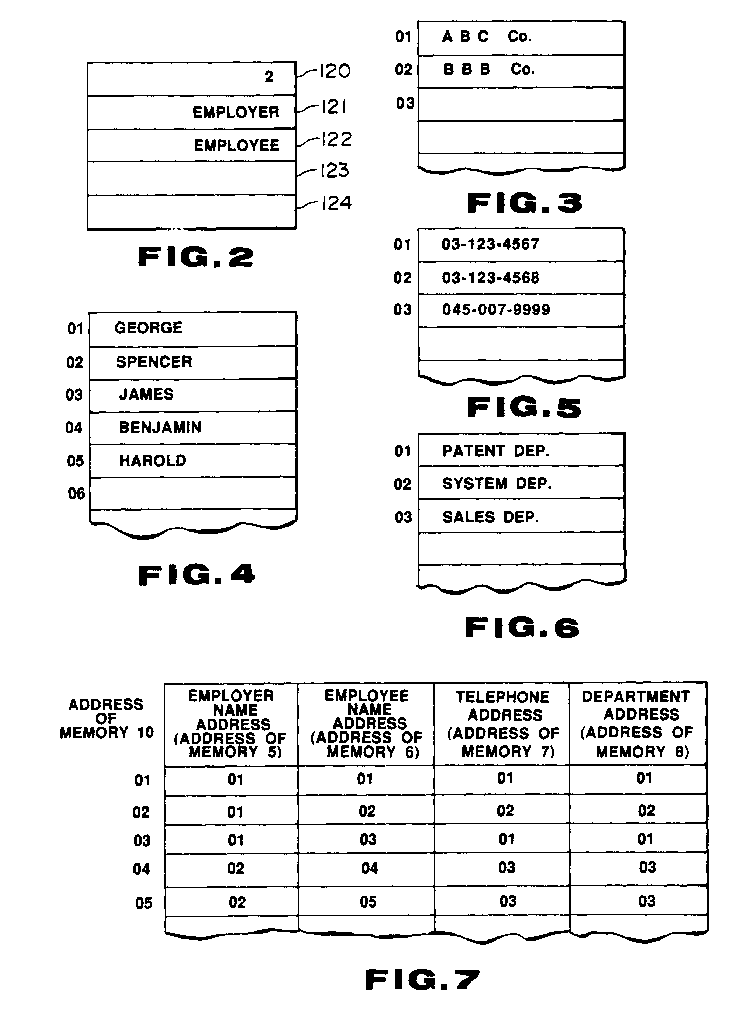

The item memory 12 will be described in detail below with reference to Fig. 2. The item memory 12 has five registers. The item memory 12 stores item names and the number thereof necessary for name card management. Fig. 2 shows a case wherein an "employer name (name of company)" and an "employe name (name of person)" are respectively stored in registers 121 and 122, and a register 120 stores "2" as the number of items.

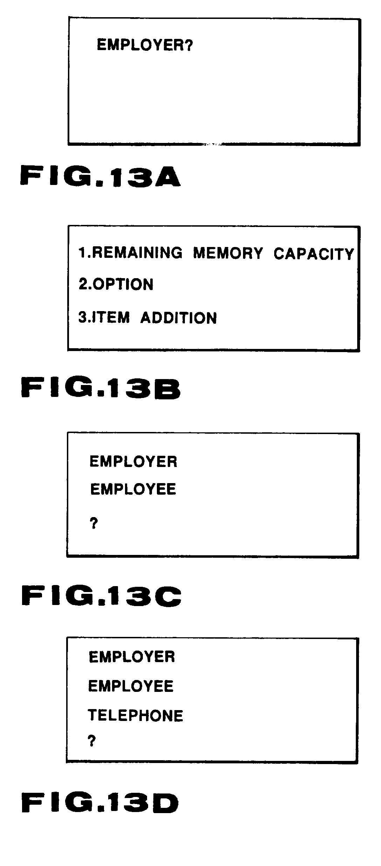

In step A1, therefore, the first item name "EMPLOYER" is displayed on the display section 19, and an operator knows that the apparatus is set in a state of waiting for an employer name input (Fig. 13A).

In this state, the operator can add an item name of data to be stores. When an item name is to be added, the operator operates the "function" key 1d. When the operation of the "function" key 1d is detected in step A2, the flow of control advances to step A3. In step A3, a menu of executable functions is displayed on the display section 19. In this case, a menu shown in, e.g., Fig. 13B is displayed. If the operator operates the numeric key 1a to input "3" so as to designate "addition of items" in accordance with the display on the display section 9, this operation is discriminated in step A4, and the flow of control advances to step A5.

In step A5, the number of items stored in the register 120 of the memory 12 is incremented by one. In Fig. 2, since the number of items is "2", the updated number of items becomes "3". In this state, the apparatus is then set in a state of waiting for a data input. Fig. 13C shows the display state of the display section 9 at this time.

Subsequently, the operator inputs an item name to be added in accordance with the display on the display section 9. If a "telephone number" is to be added as an item name, the operator inputs "TELEPHONE" with the "character" keys 1c of the key input section 1 and operates the "registration" key 1g. Fig. 13D shows the display state of the display section 9 at this time. In step A6, the input of the item name is detected, and the flow of control advances to step A7. In step A7, the input data "TELEPHONE" is written in a register 123 of the item name memory 12 as third item name data.

If the operator registers, e.g., "DEPARTMENT" as a fourth item name in the same manner as described above, "DEPARTMENT" is stored in a register 124 of the item memory 12.

When the input operation of the item name is completed, the operator operates the "name card" key 1e (step A8). In response to this key operation, the flow of control returns to step A1, and the apparatus is set in a state of waiting for a data input of the first item "EMPLOYER".

When the operator inputs an employer name by using character keys 1b (in step A9) and operates the "next item" key 1f, these key operations are detected in step A10, and the flow of control advances to step A11. In step A11, it is checked whether next item data is present.

In this case, since "EMPLOYE NAME" is present as the next item name, the flow of control advances to step A12. In step A12, the next item name "EMPLOYE NAME" is read out and displayed on the display section 19 through the display buffer 3. The flow of control then returns to step A9.

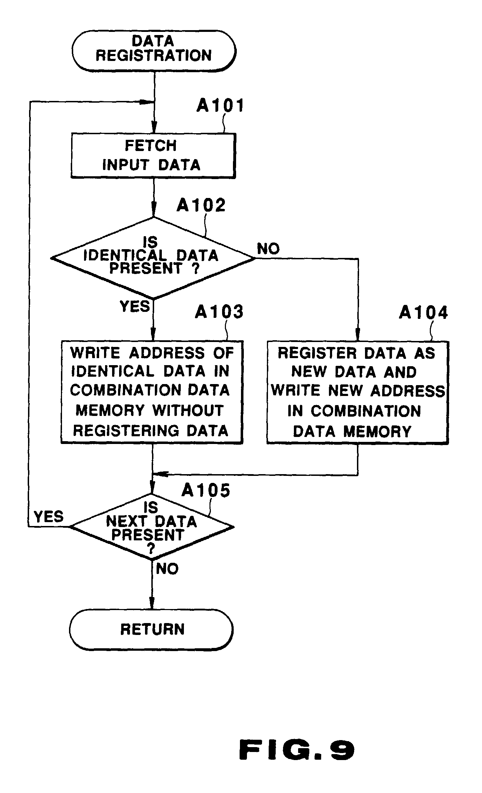

When the operator inputs name data and operates the "next item" key 1f, the flow of control advances to steps A10, A11, and A12, and the third item "TELEPHONE" is displayed. If the "registration" key 1g is operated after data corresponding to the item names "TELEPHONE" and "DEPARTMENT" are input in the same manner as described above, NO is obtained in step A10, and YES is obtained in step A13. As a result, the data are registered in step A14. This data registration processing will be described in detail below with reference to Fig. 9.

In step A101, the first data (the employer name) of input data is extracted. In step A102, it is checked whether data identical with the extracted data has been already stored in the first memory 5. If YES is obtained in step A102, the flow of control advances to step A103 in which the currently input employer name data is not newly registered, and the address of an area of the first memory 5 in which the employer name is stored is written at a predetermined position of the combination data memory 10.

If NO is obtained in step A102, the flow of control advances to step A104 to newly store the input employer data in the first memory 5 and to write the address data of an employer name data area of the first memory 5, in a predetermined position of the combination data memory 10.

When the registration processing of the employer name data is completed,it is checked in step A105 whether the next input data is present. In this case, since employe name data is present, the flow of control returns to step A101, and processing of the employe name data is executed in the same manner as described above with respect to the second memory 6.

In this manner, the respective key input data of a card name are respectively stored in the first to fourth memories 5 to 8 in units of items. The first memory 5 stores employer names; the second memory 6, employe names; the third memory 7, telephone numbers; and the fourth memory 8, the names of departments. In this case, the respective memories 5 to 8 store data so as not to store the same data twice. The item data of a given individual is stored in the combination data memory 10 in combination with corresponding address data.

Figs. 3 to 6 respectively show states of item data stored in the first to fourth memories. Fig. 7 shows the contents of the combination data memory 10, wherein data associated with five persons working for two companies are stored.

An arrangement of the combination data memory 10 shown in Fig. 7 should be noted. The memory 10 stores the respective item data of the individuals as address data of the respective memories in which the data are recorded. That is, each row of the data of a matrix configuration shown in Fig. 7 represents the data of each individual, i.e., each employe. The first to fourth columns correspond to the first to fourth memories, respectively. That is, for example, the fifth row data (02, 05, 03, 03) correspond to "BBB Co." (EMPLOYER), "HAROLD" (EMPLOYE NAME), "045-007-9999" (TELEPHONE), and "SALES DEP." (DEPARTMENT), respectively.

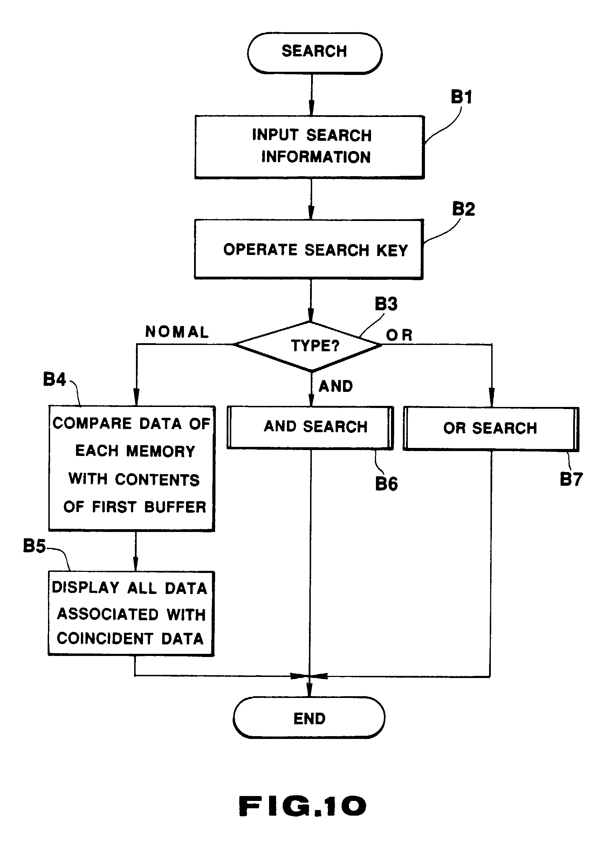

A search for stored data will be described below with reference to Fig. 10.

When a data search is to be performed, the apparatus is set in an output mode. An operator inputs search information by using the character keys 1b or the numeric keys 1a of the key input section 1, and operates the "search" key 1h. In response to this key operation, a search operation is started (steps B1 and B2). For example, search information consists of one or two words. If search information consisting of two words is to be used, an "AND" or "OR" key must be operated between the words to designate a search condition.

If the "AND" or "OR" information is input, the flow of control advances to step B6 or B7 depending on a decision made in step B3.

If the operator inputs, e.g., "HA" and operates the "search" key 1h, the flow advances to step B4.

In step B4, "HA" input in step B1 is input to the first search buffer 13. The first comparing section 15 compares the data stored in the first search buffer 13 with the data stored in the first to fourth memories 5 to 8. In this case, the first two letters of "HAROLD" stored at an address (05) of the second memory 6 coincide with the input "HA". The flow of control then advances to step B5, and data of his employer name, his telephone number, and a department to which he belongs are supplied from addresses of other memories which are associated with the address (05) of the second memory 6 to the display buffer 3 to be displayed.

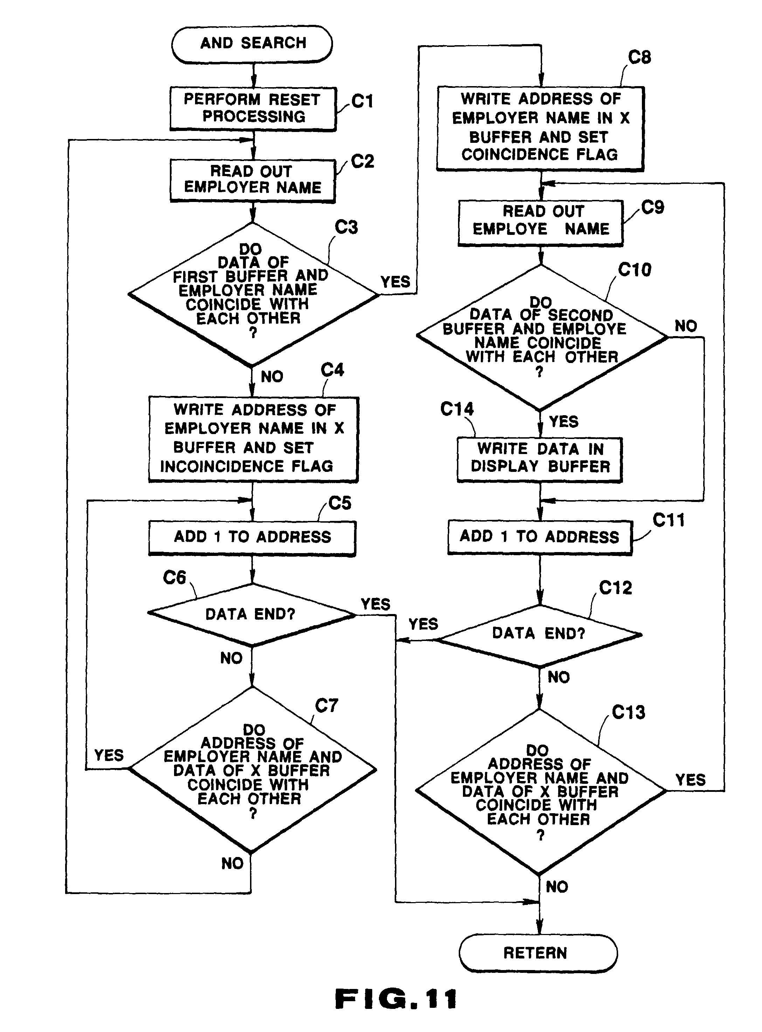

A search operation using two words will be described below. In this embodiment, search data of an employer name and an employe name are input. If, for example, character "B" is input, the "AND" key 1i is operated, characters "HA" are input, and the "search" key 1h is operated, an AND search operation is executed in accordance with the flow chart shown in Fig. 11.

The input data "B" and "HA" are respectively written in the first and second search buffers 13 and 14. Reset processing is then performed in step C1. In this case, the address control section 9 resets the addresses of the first to fourth memories (to be 01) and clears the contents of the X buffer 16 and the flag memory 18.

The flow of control then advances to step C2 to read out an employer name "ABC Co." from an address of the first memory 5 corresponding to an employer name address data (01) written at an address (01) of the combination data memory 10. In step C3, one search data, i.e., the employer name "B" stored in the first search buffer 13 is compared with "ABC Co." by the first comparing section 15. In this case, since they do not coincide with each other, NO is obtained in step C3, and the flow advances to step C4.

In step C4, the employer name address (01) at which noncoincidence is determined is written in the X buffer 16, and the noncoincidence flag is set in the flag memory 18. In step C5, the address of the combination data memory 10 is increased by one, and a data end is checked in step C6. In this case, since the remaining data is present, NO is obtained in step C6, and the flow of control advances to step C7. The employer name address (01) written at an address (02) of the combination data memory 10 is compared with the address data (01) written in the X buffer 16 by the second comparing section 17 so as to check whether they coincide with each other. In this case, since they coincide with each other, the flow of control returns to step C5 to increase the address of the memory 10 by one, and the operation from step C6 is repeated. Subsequently, the operation from step C5 to step C7 is repeated in the same manner as described above. Employer name addresses (01) determined to be coincident with the address (01) written in the X buffer 16 in this manner are not regarded as the corresponding data. Note that if a data end is detected and YES is obtained in step C6 in the course of such an operation, the flow returns to the flow chart shown in Fig. 10, and the search operation is completed.

If the address of the combination data memory 10 is increased to (04), employer name address data (02) is obtained. Since the address data (02) does not coincide with the address data (01) written in the X buffer 16, NO is obtained by the second comparing section 17 in step C7. As a result, the flow of control returns to step C2. In this case, an employer name "BBB Co." is read out from an address of the first memory 5 corresponding to the employer name address (02) written at the address (04) of the memory 10. In step C3, the first comparing section 15 compares "BBB Co." with one search data written in the first search buffer 13, i.e., employer name "B". Since YES is obtained in step C3, the flow advances to step C8.

In step C8, the employer name address (02) at which coincidence is determined is written in the X buffer 16, and at the same time, the coincidence flag is set in the flag memory 18. In step C9, an employe name "BENJAMIN" is read out from an address of the second memory 6 corresponding to the employe name address (04) written at the address (04) of the memory 10. In step C10, the readout name is compared with the other search data written in the second search buffer 14, i.e., the employe name "HA". In this case, since NO is obtained in step C10, the flow of control advances to step C11.

In step C11, the address of the combination data memory 10 is increased by one. In step C12, a data end is checked. If YES is obtained in step C12, the flow of control returns to the processing shown in Fig. 10, thereby completing the search operation. In this case, since NO is obtained in step C12, the flow of control advances to step C13. In step C13, an employer name address (02) written at an address (05) of the combination data memory 10 is compared with the address data written in the X buffer 16 so as to determine whether they coincide with each other. If an employer name at the corresponding address is different from "BBB Co." and NO is obtained in step C13, the flow of control returns to the processing shown in Fig. 10, thus completing the search operation. In this case, however, YES is obtained in step C13, and hence the flow of control returns to step C9 to read out a name "HAROLD" from an address of the second memory 16 corresponding to the address (05) of the memory 10. In step C10, "HAROLD" is compared with the other search data written in the second search buffer 14, i.e., "HA". Since they coincide with each other in this case, the flow of control advances to step C14 to display the search data on the display section 19. That is, in this case, if both the data of the employer name and the employe name coincide with the search data, the corresponding data is determined, and the data to be searched is displayed on the display section 19. In this case, item data are read out from addresses of the memories 5, 6, 7, and 8 respectively corresponding to the employer name address (02), the employe name address (05), a telephone number address (03), and a department address (03) which are written in the storage area at the address (05) of the combination data memory 10. As a result, the employer name "BBB Co.", the employe name "HAROLD", a telephone number "045-007-9999", and a department "SALES DEP" are displayed on the display section 19 as the data to be searched.

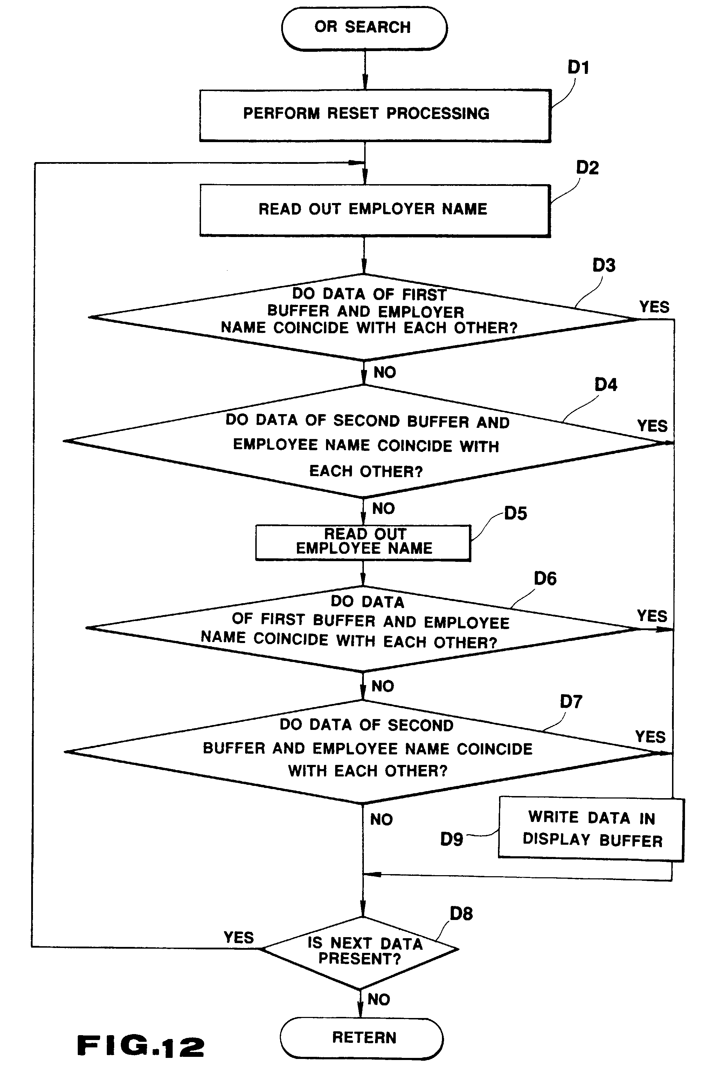

An OR search operation is executed in accordance with a flow chart shown in Fig. 12. In step D1, reset processing is performed. The addresses of the combination data memory 10 and the first to fourth memories 5 to 8 are reset (set to be 01) by the address control section 9, and at the same time, the contents of the X buffer 16 and the flag memory 18 are cleared.

The flow of control then advances to step D2 to read out an employer name "ABC Co." from an address of the first memory 5 corresponding to the address (01) written at the address (01) of the memory 10. In step D3, the readout data and one search data written in the first search buffer 13 are compared with each other by the first comparing section 13. In this case, since they do not coincide with each other, the flow advances to step D4. In step D4, the employer name "ABC Co." in the first memory 5 corresponding to the employer address (01) written at the address (01) of the memory 10 is compared with the other search data (the name "HA") written in the second buffer 14. In this case, they do not coincide with each other either, and the flow advances to step D5.

In step D5, an employe name "GEORGE" in the second memory 6 corresponding to an employe name address (01) written at the address (01) of the combination data memory 10 is read out. In step D6, the first comparing section 15 compares the readout data with one search data written in the first search buffer 13. In this case, since they do not coincide with each other, the flow of control advances to step D7. In step D7, the employe name "GEORGE" in the second memory 6 corresponding to the employe name address (01) written in the address (01) of the memory 10 is compared with the other search data (the employe name "HA") written in the second search buffer 14. In this case, they do not coincide with each other either, the flow of control advances to step D8. In step D8, it is checked whether the next data is present. In this case, since the next data is present, the flow of control returns to step D2. In step D2, the employer name "ABC Co." stored in a storage area of the first memory 5 corresponding to the employer address (01) written in a storage area of an address (02) of the combination data memory 10 is read out, and the operation from step D3 is executed.

Subsequently, an operation similar to the above-described operation is repeated while the address of the combination data memory 10 is sequentially updated. In step D2, the employer name "BBB Co." in the first memory 5 corresponding to an address (04) of the memory 10 is read out. If the readout employer name is compared with one search data written in the first search buffer 13, they coincide with each other. As a result, the flow of control advances to step D9, and the search data is displayed on the display section 19. In this case, when either the employer name or the employe name of the individual data coincides with the search data, the individual data is determined to be data which has been searched and is displayed on the display section 19. In this case, item data are read out from addresses of the memories 5, 6, 7, and 8 respectively corresponding to the employer name address (02), the employe name address (04), a telephone number address (03), and a department address (03) which are written in the storage area at the address (04) of the combination data memory 10. As a result, the employer name "BBB Co.", the employe name "BENJAMIN", a telephone number "045-007-9999", and a department "SALES DEP" are displayed on the display section 19 as the data to be searched.

## Claims

1. A data processing apparatus comprising:
key input means (1) for inputting item data associated with an individual, item memory means (12) for storing a plurality of item names, which, during an input mode are successively displayed on a display means to guide the user when inputting corresponding item data,
first data memory means (5-8) for storing the inputted item data in units corresponding to the item names,
second data memory means (10) for storing combinations of addresses of the first data memory means (5-8), whereby each combination points to the complete item data stored for a certain individual within the first data memory means and whereby units of item data which have previously already been inputted and are therefore already stored in the first memory means are not newly registered, and
means (1d,4) for adding a further item name to the item names stored in the item memory means (12) and for changing the input mode accordingly in that item data corresponding to the further item name can be inputted and is stored accordingly.

2. An apparatus according to claim 1, characterised by further including guidance display means (4, 3, 19) for requesting data to be input one by one in units of the items stored in said item memory means (12) when data input is performed.

3. An apparatus according to claim 2, characterised by further including a specific key (1f) for advancing an item of input request to a next item.

4. An apparatus according to claim 1, characterised in that said item memory means (12) stores items described on a name card.

5. An apparatus according to claim 1, characterised in that said second data memory means (10) includes means for holding a combination of data of each item associated with an individual, as a combination of address data of each item data stored in said first memory means, and further comprising stored data sorting means (11) for sorting contents of said second memory means in accordance with predetermined items.

6. An apparatus according to claim 5, characterised in that said first memory means (5-8) comprises sub-memory means of a number corresponding to the number of items in which data corresponding to the items are stored, and said second memory means (10) comprises means for storing item data of each individual as combinations of address data of said sub-memory means.

## Patentansprüche

1. Datenverarbeitungsgerät, umfassend:
eine Tasteneingabeeinrichtung (1) zum Eingeben von Itemdaten, die mit einer Person verbunden sind, eine Itemspeichereinrichtung (12) zum Speichern einer Mehrzahl von Itemnamen, die während eines Eingabemodusses nacheinander auf einer Anzeigeeinrichtung angezeigt werden, um den Benutzer zu führen, wenn er entsprechende Itemdaten eingibt,
eine erste Datenspeichereinrichtung (5-8) zum Speichern der eingegebenen Itemdaten in Einheiten, die den Itemnamen entsprechen,
eine zweite Datenspeichereinrichtung (10) zum Speichern von Kombinationen von Adressen der ersten Datenspeichereinrichtung, wobei jede Kombination auf die vollständigen für eine bestimmte Person innerhalb der ersten Datenspeichereinrichtung gespeicherten Itemdaten zeigt und wobei Einheiten von Itemdaten, die bereits früher eingegeben worden sind und deshalb bereits in der ersten Speichereinrichtung gespeichert sind, nicht neu eingetragen werden, und
eine Einrichtung (1d, 4) zum Hinzufügen eines weiteren Itemnamens zu den in der Itemspeichereinrichtung (12) gespeicherten Itemnamen und zum entsprechenden Ändern des Eingabemodusses so, daß Itemdaten, die dem weiteren Itemnamen entsprechen, eingegeben werden können und entsprechend gespeichert werden.

2. Gerät nach Anspruch 1, gekennzeichnet durch weiter umfassend eine Führungsanzeigeeinrichtung (4, 3, 19) zum Anfordern einzugebender Daten eine nach der anderen in Einheiten der in der Itemspeichereinrichtung (12) gespeicherten Items, wenn Dateneingabe durchgeführt wird.

3. Gerät nach Anspruch 2, gekennzeichnet durch weiter umfassend eine spezifische Taste (1f) zum Vorrücken eines Eingabeanforderungsitems auf ein nächstes Item.

4. Gerät nach Anspruch 1, dadurch gekennzeichnet, daß die Itemspeichereinrichtung (12) auf einer Namenskarte beschriebene Items speichert.

5. Gerät nach Anspruch 1, dadurch gekennzeichnet, daß die zweite Datenspeichereinrichtung (10) eine Einrichtung umfaßt, die eine Kombination von Daten jedes mit einer Person verbundenen Items als eine Kombination von Adressendaten aller in der ersten Speichereinrichtung gespeicherten Itemdaten hält, und weiter eine Sortiereinrichtung (11) für gespeicherte Daten umfaßt, um den Inhalt der zweiten Speichereinrichtung nach Maßgabe vorbestimmter Items zu sortieren.

6. Gerät nach Anspruch 5, dadurch gekennzeichnet, daß die erste Speichereinrichtung (5-8) Unterspeichereinrichtungen einer Zahl umfaßt, die der Zahl von Items entspricht, in denen Daten, die den Items entsprechen, gespeichert werden, und die zweite Speichereinrichtung (10) eine Einrichtung zum Speichern von Itemdaten jeder Person als Kombinationen von Adressendaten der Unterspeichereinrichtung umfaßt.

## Revendications

1. Un dispositif de traitement de données comprenant :
des moyens d'entrée par touches (1) pour introduire des données d'article associées à une personne, des moyens de mémoire d'articles (12) pour enregistrer un ensemble de noms d'articles qui, pendant un mode d'entrée, sont visualisés successivement sur des moyens de visualisation, pour guider l'utilisateur pendant l'introduction de données d'article correspondantes,
des premiers moyens de mémoire de données (5-8) pour enregistrer les données d'article introduites, par unités correspondant aux noms d'article,
des seconds moyens de mémoire de données (10) pour enregistrer des combinaisons d'adresses des premiers moyens de mémoire de données (5-8), grâce à quoi chaque combinaison désigne les données d'article complètes qui sont enregistrées pour une certaine personne dans les premiers moyens de mémoire de données, et grâce à quoi des unités de données d'article qui ont déjà été introduites précédemment, et qui sont donc déjà enregistrées dans les premiers moyens de mémoire, ne sont pas enregistrées à nouveau, et
des moyens (1d, 4) pour ajouter un nom d'article supplémentaire aux noms d'article qui sont enregistrés dans les moyens de mémoire d'articles (12), et pour changer le mode d'entrée de façon correspondante, de manière que des données d'article correspondant au nom d'article supplémentaire puissent être introduites et soient enregistrées de façon correspondante.

2. Un dispositif selon la revendication 1, caractérisé en ce qu'il comprend en outre des moyens de visualisation de guidage d'utilisateur (4, 3, 19) pour demander des données à introduire, une par une, par unités correspondant aux articles enregistrés dans les moyens de mémoire d'articles (12) lorsqu'une opération d'entrée de données est effectuée.

3. Un dispositif selon la revendication 2, caractérisé en ce qu'il comprend en outre une touche spécifique (1f) pour passer d'un article de demande d'entrée à un article suivant.

4. Un dispositif selon la revendication 1, caractérisé en ce que les moyens de mémoire d'articles (12) enregistrent des articles qui sont spécifiés sur une carte de visite.

5. Un dispositif selon la revendication 1, caractérisé en ce que les seconds moyens de mémoire de données (10) comprennent des moyens pour conserver une combinaison de données de chaque article associé à une personne, sous la forme d'une combinaison de données d'adresse de chaque donnée d'article enregistrée dans les premiers moyens de mémoire, et ce dispositif comprend en outre des moyens de tri de données enregistrées (11) pour trier le contenu des seconds moyens de mémoire conformément à des articles prédéterminés.

6. Un dispositif selon la revendication 5, caractérisé en ce que les premiers moyens de mémoire (5-8) comprennent des moyens de mémoire partiels en un nombre correspondant au nombre d'articles, dans lesquels sont enregistrées des données correspondant aux articles, et les seconds moyens de mémoire (10) comprennent des moyens pour enregistrer des données d'article de chaque personne sous la forme de combinaisons de données d'adresse des moyens de mémoire partiels.
